Europäisches Patentamt

European Patent Office

Office européen des brevets

(11) Numéro de publication: **0 436 446 A1**

(12)

# DEMANDE DE BREVET EUROPEEN

(21) Numéro de dépôt: 90420515.0

(22) Date de dépôt: **28.11.90**

(51) Int. Cl.⁵: **G07F 7/06**

(30) Priorité: **05.01.90 FR 9000517**

(43) Date de publication de la demande:
**10.07.91 Bulletin 91/28**

(84) Etats contractants désignés:
**AT BE CH DE DK ES FR GB GR IT LI LU NL SE**

(71) Demandeur: **MULLER AUTOMATISMES**
**89 rue Lavoisier**
**F-69400 Villefranche sur Saone(FR)**

(72) Inventeur: **Muller, Alfred**
**5 F Chemin de Parsonge**
**F-69570 Dardilly(FR)**
Inventeur: **D'Arpino, Michel**
**109 rue Jean Boileau**
**F-69100 Villeurbanne(FR)**

(74) Mandataire: **Guerre, Dominique et al**
**Cabinet Germain et Maureau 20 Boulevard**
**Eugène Deruelle BP 3011**
**F-69392 Lyon Cédex 03(FR)**

(54) **Appareil pour récupérer et détruire un objet en matière plastique, contre délivrance d'une contre-valeur.**

(57) Appareil pour récupérer un objet (1) creux, allongé selon une direction (2) longitudinale ou hauteur, présentant une paroi en matière plastique, par exemple un gobelet, contre la délivrance d'un support de contre-valeur, comprenant un sas (5) pour l'introduction de l'objet par l'utilisateur, un dispositif (6) de reconnaissance de la conformité de l'objet, un dispositif de destruction (8) de l'objet reconnu conforme, un moyen de stockage (12) de l'objet détruit, et un dispositif de délivrance (13) du support de contre-valeur, **caractérisé en ce que** le dispositif (8) de destruction associe au moins un support de fusion (9) de l'objet (1) reconnu conforme, et un dispositif (10) de génération d'un flux d'air chaud, comportant une buse (10a) d'émission du flux, dirigée vers l'objet supporté, ledit générateur d'air chaud étant réglé à une température suffisante pour provoquer une rétraction par fusion de l'objet (1) à détruire.

FIG.2

# APPAREIL POUR RÉCUPÉRER ET DÉTRUIRE UN OBJET EN MATIÈRE PLASTIQUE, CONTRE DÉLIVRANCE D'UNE CONTRE-VALEUR

La présente invention concerne un appareil ou matériel permettant de récupérer, avec destruction, un objet en matière plastique, par exemple du type emballage perdu, contre délivrance d'un support d'une contre-valeur, qu'il s'agisse d'une ou plusieurs pièces de monnaie réprésentant une consigne, ou d'un ticket servant d'avoir pour un achat ultérieur.

L'invention sera explicitée par référence à des gobelets plastiques, tels qu'utilisés dans divers distributeurs de boissons chaudes ou froides. Mais, en ce qui concerne la destruction desdits gobelets, il doit être entendu que l'invention peut être appliquée à d'autres objets, dès lors que ces derniers répondent aux caractéristiques générales définies ci-après.

Ces gobelets ont usuellement une forme extérieure allongée, de révolution autour d'une dimension ou direction longitudinale, dite hauteur, par exemple ont une forme tronconique. Ils comportent deux extrémités, selon la hauteur, l'une fermée constituant son fond, et l'autre ouverte délimitée par un bourrelet ou zone annulaire extérieure, en général d'aspect différent de celui du corps tronconique, par exemple blanc et brillant, alors que l'extérieur du corps est coloré et mat. Ces gobelets sont faits en matière plastique, par exemple en polyéthylène étiré.

Conformément au document EP-A-0301978, on a décrit un appareil tel qu'énoncé précédemment, comprenant :

- un sas avec porte d'accès verrouillable, pour l'introduction du gobelet usagé par l'utilisateur
- un dispositif de reconnaissance de la conformité du gobelet, par un système optique associant une source lumineuse pour l'émission d'un faisceau lumineux, et un capteur de réflexion de ce dernier sur le bourrelet annulaire extérieur du gobelet
- un dispositif de destruction du gobelet reconnu conforme, comprenant une lame de perforation et découpe dudit gobelet
- un moyen ou récipient, du type sac-poubelle, pour la réception et le stockage des gobelets détruits
- un dispositif de délivrance de la contre-valeur, en l'occurrence restituant la monnaie correspondant à la consigne.

La présente invention a pour objet d'améliorer un appareil tel que montré par le document EP-A-0301978, sous deux aspects, d'une part en ce qui concerne la destruction des gobelets conformes, et d'autre part en ce qui concerne la reconnaissance de ces derniers.

Sous son premier aspect, l'invention propose un dispositif de destruction par voie thermique de l'objet ou gobelet reconnu conforme, mais sans brûlage ou destruction par le feu de ce dernier. A cette fin, un dispositif de destruction selon l'invention associe au moins un support de fusion de l'objet reconnu conforme, et un dispositif générateur d'un flux d'air chaud, comportant une buse d'émission du flux , dirigée vers l'objet supporté ; le générateur d'air chaud est réglé à une température suffisante, par exemple 550°C, pour provoquer une rétraction par fusion de l'objet à détruire.

Cette solution s'avère particulièrement simple et efficace pour la destruction de gobelets plastiques, les tensions générées à l'origine par l'étirage du gobelet étant alors supprimées, pour conduire à une forme ramassée assimilable à une galette. Cette solution présente également l'avantage déterminant de conduire à la stérilisation des gobelets usagés, ce qui améliore encore l'hygiène des appareils selon l'invention.

Sous son deuxième aspect, la présente invention fait ensuite le choix de retenir des gobelets présentant une zone supplémentaire, par exemple un appendice, majorant leur hauteur. Un tel appendice consiste notamment en un fond rapporté sur le fond usuel, lesdits fonds déterminant entre eux un épaulement. De tels gobelets ont par exemple été décrits dans les documents FR-A-2 391 923, US-C-4 197 948, et EP-A-0 250 100. Mais aucun de ces documents n'a décrit ou proposé d'utiliser un tel appendice à des fins de contrôle. Et tel est le choix fait selon l'invention, en ce qui concerne la reconnaissance d'un gobelet conforme. A cette fin, le dispositif de reconnaissance selon l'invention comporte un moyen de détection de la présence sur le gobelet de la zone supplémentaire de contrôle, cette détection permettant de discriminer un gobelet conforme, donnant lieu à la délivrance d'une contre-valeur, d'un gobelet non conforme, ne donnant lieu à aucune restitution d'une contre-valeur.

La solution selon l'invention présente l'avantage d'une grande simplicité, en ce qui concerne la reconnaissance des objets ou gobelets donnant lieu à restitution ou délivrance de la contre-valeur.

La présente invention est maintenant décrite par référence aux dessins annexés, dans lesquels :

- la figure 1 représente de manière schématique, un objet ou gobelet plastique, traité conformément à l'invention
- la figure 2 représente, en coupe verticale, un schéma d'ensemble d'un appareil conforme à l'invention

- la figure 3 représente une vue en perspective, par dessous, du dispositif de reconnaissance de la conformité d'un gobelet, d'une part, et du dispositif de destruction de l'objet reconnu conforme, d'autre part, ces deux dispositifs faisant partie de l'appareil représenté schématiquement à la figure 2
- les figures 4a, 4b et 4c représentent les deux dispositifs précités, dans différentes étapes de leur fonctionnement, à savoir respectivement, premièrement à la mise en fonctionnement de l'appareil, après fermeture du sas d'introduction du gobelet, deuxièment au moment de la détection d'un gobelet conforme, et troisièment au moment du transfert d'un gobelet reconnu conforme vers le dispositif de destruction
- la figure 5 représente une vue du dispositif de reconnaissance d'un gobelet conforme, selon les flèches V-V de la figure 4b
- la figure 6 représente en coupe verticale le sas d'introduction d'un gobelet traité dans l'appareil selon l'invention
- la figure 7 représente une vue du moyen de préhension d'un gobelet, dans la direction des flèches VII-VII montrées dans la figure 4b
- les figures 8a et 8b représentent une variante de l'organe de contrôle faisant partie du dispositif de reconnaissance selon l'invention.

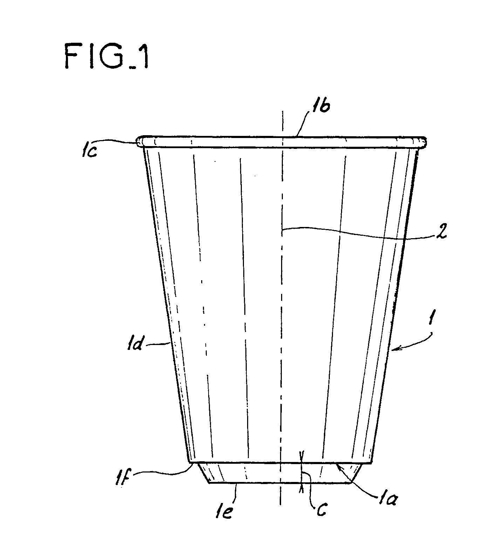

Conformément à la figure 1, un gobelet traité 1 présente de manière usuelle une forme extérieure allongée, de révolution autour d'une dimension ou direction longitudinale 2 ou hauteur ; cette forme est par exemple de manière générale tronconique. Ce gobelet comporte deux extrémités selon la hauteur 2, l'une la fermée constituant le fond, et l'autre 1b ouverte, délimitée par un bourrelet 1c, ou zone annulaire extérieure. Cette dernière présente en général un aspect différent de celui du corps tronconique 1d, par exemple un aspect blanc et brillant, alors que l'extérieur du corps 1d est coloré et mat. Ces gobelets, comme déjà dit, sont généralement faits en matière plastique, par exemple en polyéthylène étiré.

Conformément à l'invention, les gobelets reconnus comme conformes, c'est à dire ceux donnant lieu à délivrance ou restitution d'une consigne dans l'appareil décrit ci-après, sont ceux qui comportent un fond le rapporté sur le fond usuel la, les fonds étagés la et le délimitant ou déterminant entre eux un épaulement 1f. Selon l'invention, le fond rapporté le du gobelet conforme, constituera, comme décrit ci-après, une zone de contrôle, supplémentaire par rapport à la forme extérieure usuelle des gobelets en question ; cette zone supplémentaire majore la hauteur hors-tout du gobelet d'une valeur (c) correspondant à l'épaisseur du fond rapporté le.

Par différence à la description précédente, les gobelets non conformes seront ceux présentant une forme usuelle, c'est à dire ceux pour lesquels le fond rapporté ou appendice le est absent.

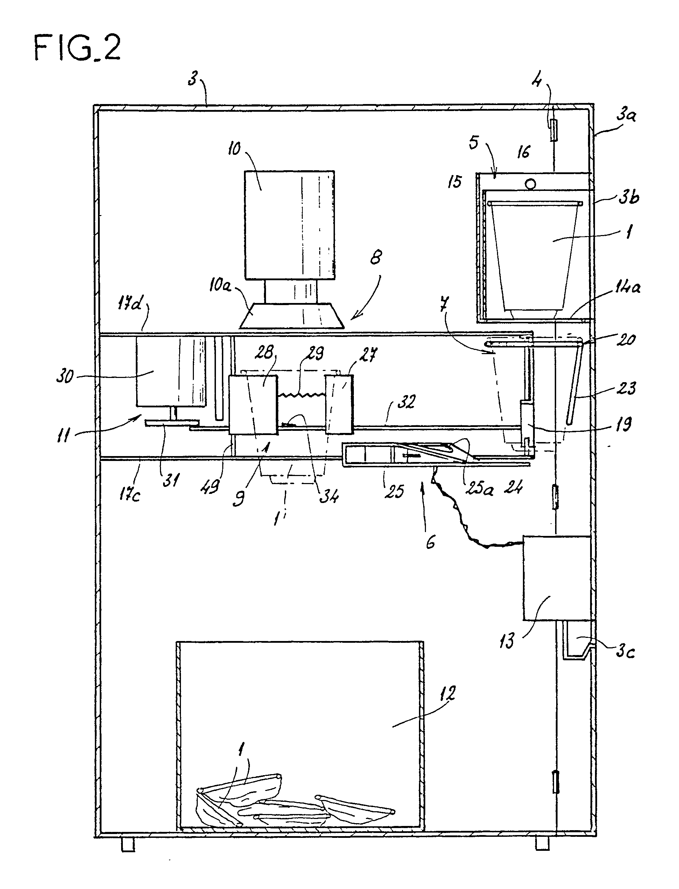

Conformément à la figure 2, un appareil conforme à l'invention, se présente sous la forme d'une armoire 3 parallélépipédique, pourvue d'une porte d'accès 3a articulée sur des charnières 4. Dans cette armoire, sont agencés et disposés les constituants ou dispositifs principaux suivants :

- un sas 5 pour l'introduction du gobelet par l'utilisateur, à partir d'une ouverture 3b prévue dans la porte de l'armoire 3
- un dispositif 6 de reconnaissance de la conformité d'un gobelet, associé à un moyen de préhension 7 du gobelet
- un dispositif de destruction 8 de l'objet reconnu conforme, associant un support de fusion 9 et un générateur 10 d'un flux d'air chaud
- un mécanisme 11 d'actionnement du moyen de préhension et de la pince 9
- un moyen 12 ou poubelle de stockage des gobelets reconnus conformes et détruits par fusion
- un monnayeur 13 ou dispositif de délivrance de pièces de monnaie, c'est à dire d'une contre-valeur représentant par exemple une consigne ; les pièces de monnaie peuvent être recueillies par l'ouverture 3c prévue dans la porte 3b, à sa partie inférieure
- un moyen de contrôle de l'appareil, non représenté, assurant les différentes fonctions ou séquences de fonctionnement décrites ci-après.

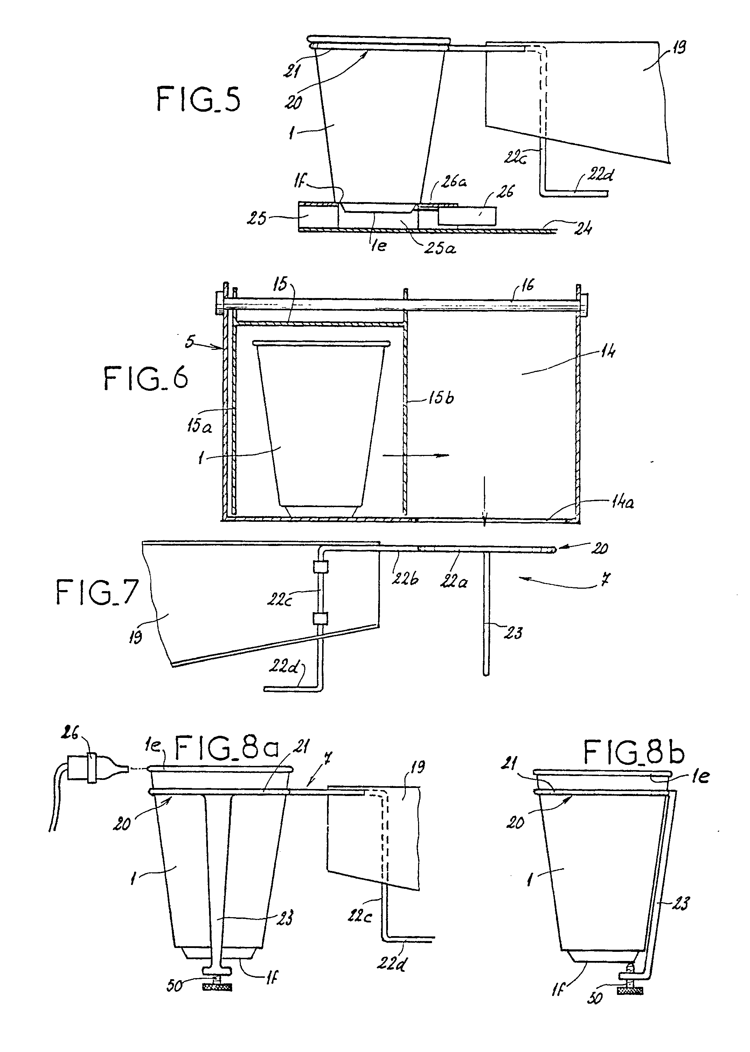

Conformément aux figures 6 et 7, le sas d'introduction du gobelet usagé comporte un compartiment parallélépipédique 14 ouvert pour partie sur l'ouverture 3b dans la porte 3c, et comportant une ouverture 14a vers le bas, en direction du moyen de préhension 7. Ce compartiment est équipé d'un tiroir 15 déplaçable en translation dans le compartiment 14, par une ou plusieurs tiges de guidage 16, et comportant deux cloisons parallèles 15a et 15b, séparées l'une de l'autre d'une distance correspondant à la largeur, ou distance entre l'ouverture 3b et l'ouverture 14a. Le fonctionnement d'un tel sas est tout à fait simple :

- le tiroir 15 étant amené en coincidence avec l'ouverture 3b, l'utilisateur introduit un gobelet 1 entre les parois 15a et 15b
- en déplaçant le tiroir en translation vers la droite, selon la figure 6, par des moyens appropriés non représentés, l'utilisateur transfère le gobelet 1 vers l'ouverture de chute 14a, sans avoir accès à aucun moment à cette dernière

De cette manière, l'accès à l'intérieur de la machine ou appareil est totalement protégé.

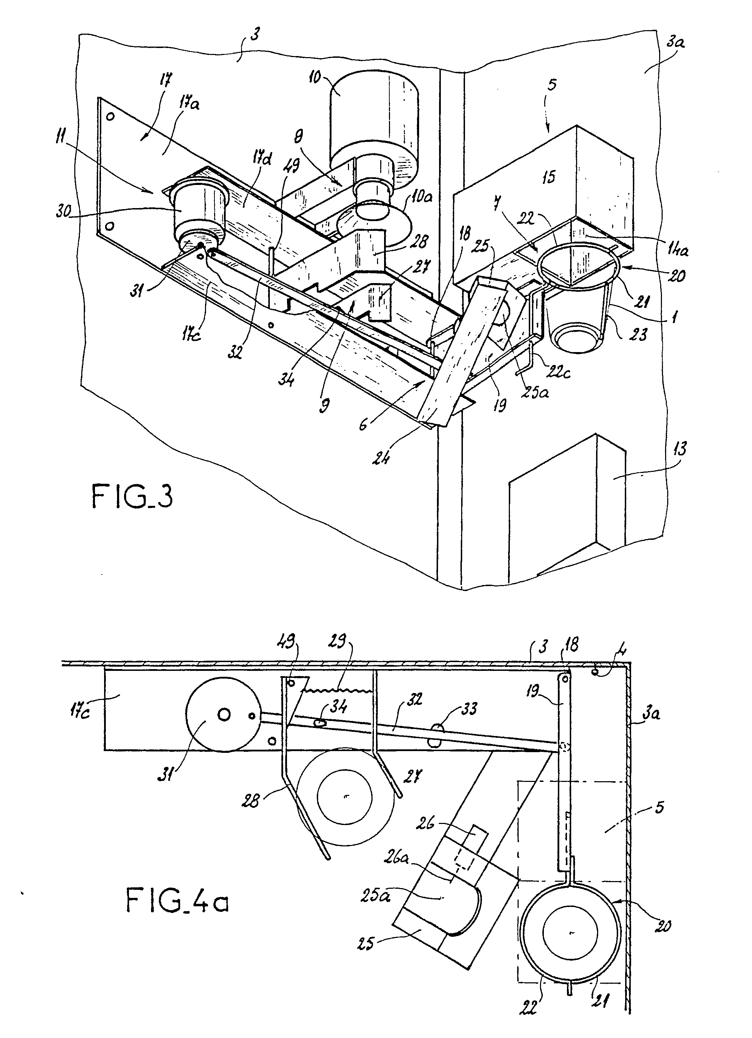

Comme représenté à la figure 3, l'appareil comprend une console 17 de support des dispositifs ou composants principaux, comprenant une plaque 17a fixée sur la partie arrière de l'armoire, et deux tables 17c et 17d, parallèles l'une à l'autre, et perpendiculaires à la plaque principale 17a.

Le moyen de préhension 7 comporte un volet 19 articulé 18 à une extrémité sur les deux tables 17c et 17d. Ce volet consiste en une plaque dont les deux bordures sont retournées perpendiculairement à l'âme centrale, ayant une forme générale trapézoïdale. Le même moyen de préhension 7 comporte un anneau 20 disposé dans un plan horizontal pour le support d'un gobelet 1 par l'une de ses extrémités, et plus précisément par son rebord ou bourrelet annulaire 1c. Cet anneau 20 est en fait constitué de deux parties en fil métallique formé de manière appropriée, à savoir une première partie fixe 21 soudée sur la face extérieure du volet 19, et une deuxième partie mobile 22 articulée à l'intérieur du volet 19. Plus précisément, comme représenté aux figures 5 et 7, cette deuxième partie 22 comporte une première section 22a ayant la forme d'une demi-circonférence, un bras de soutien diamétral 22b, une section à angle droit 22c formant axe d'articulation, et une section terminale 22d toujours à angle droit, formant levier comme décrit ci-après. La partie fixe 21, également sous forme de circonférence, est solidaire d'une tige 23 d'appui sur le corps 1d d'un gobelet supporté.

Le dispositif de reconnaissance 6 comporte un bras 24, solidaire de la console 17 et disposé de manière oblique comme le représente la figure 4a, par exemple. A l'extrémité libre de ce bras 24 est disposé un guide 25 du fond rapporté le d'un gobelet 1. Comme représenté à la figure 5, ce guide 25 est constitué par une tôle pliée en épingle, solidaire du bras 25, ménageant une ouverture 25a dont la bordure supérieure est à même d'assurer le support de l'épaulement 1f d'un gobelet 1 conforme. Un palpeur 26 est disposé et protégé entre les deux parties supérieure et inférieure de la tôle 25, et comporte un doigt 26a pouvant entrer en contact avec le fond rapporté le d'un gobelet 1 conforme, toujours comme montré à la figure 5. Le palpeur 26 est donc disposé, grâce à une position appropriée du bras 24, au niveau du fond rapporté le d'un gobelet conforme.

Le dispositif de destruction 8 associe le support de fusion 9 et le générateur d'air chaud 10, l'un au dessous de l'autre. Le générateur d'air chaud est constitué à la manière d'un sèche-cheveux électrique, et comporte par conséquent une résistance de chauffage et un ventilateur. Sa buse 10a peut émettre un flux d'air chaud dirigé selon la hauteur du gobelet supporté dans la pince 9. Ce générateur est réglé en température à une valeur suffisante, par exemple à 550°C, pour provoquer la rétraction par fusion du gobelet reconnu conforme à détruire. Comme le montre bien la figure 3, de plus le générateur d'air chaud 10 est disposé du côté de l'extrémité ouverte 1b du gobelet 1. Comme montré aux figures 4a à 4c, la pince 9 comporte un mors fixe 27, disposé perpendiculairement à la plaque arrière 17a de la console 17, et un mors 28 mobile en rotation autour d'un axe vertical 49 sur la console 17. Le mors mobile 28 est rappelé vers le mors fixe 27 par un ressort 29. Le support de fusion 9, comme l'anneau 20 précédemment décrit, permet de supporter le gobelet à détruire par l'une de ses extrémités, à savoir par son rebord 1c.

La course angulaire du volet 19 permet de déplacer l'anneau 20 d'un endroit situé en correspondance avec l'ouverture 14a du sas 5, á un autre endroit situé au-dessus de l'ouverture du support de fusion ou pince 9, en passant par l'ouverture 25a prévue sur le guide 25.

Le mécanisme d'actionnement 11 comporte :
- un moteur électrique 30, suspendu à la console 17, et plus précisément à sa paroi supérieure 17d
- une came 31 entraînée en rotation par le moteur 30
- une bielle 32 déplacée par la came 31, reliant cette dernière et le volet 19 articule comme indiqué précédemment sur l'axe 18
- une butée 33, émergeant de la plaque inférieure 17c de la console 17, servant à l'actionnement de la section terminale 22d de la partie mobile 22 de l'anneau 20
- une butée 34 solidaire de la bielle 32, servant à l'actionnement du mors mobile 28 du support de fusion 9.

Le fonctionnement de l'appareil décrit précédemment est alors le suivant, grâce à des moyens de contrôle, de type électronique par exemple, non représentés :
- par l'ouverture 3b dans l'armoire 3, l'utilisateur introduit un gobelet usagé, entre les deux cloisons 15a et 15b du tiroir 15 du sas 5 ; en déplaçant le tiroir 15, soit par des moyens automatiques, soit par l'action de l'utilisateur avec une poignée par exemple, le gobelet usagé 1 est amené dans l'ouverture 14a du compartiment 14, pour chuter dans l'ouverture de l'anneau 20 du moyen de préhension 7, comme montré par la mise en correspondance des figures 6 et 7 ; dès cet instant, le moyen de préhension 7 est actionné par la mise en route du moteur 30 et de la came 31
- conformément à la figure 4a, le gobelet usagé 1 étant supporté par son rebord extérieur 1c dans l'anneau 20, celui-ci est déplacé, grâce à la bielle 32, selon une trajectoire de contrôle, correspondant au quart d'un arc de cercle environ, et ceci d'une position en correspondance avec l'ouverture 14a à une position en correspondance avec l'ouverture des deux mors 27 et 28 du support de fusion 9

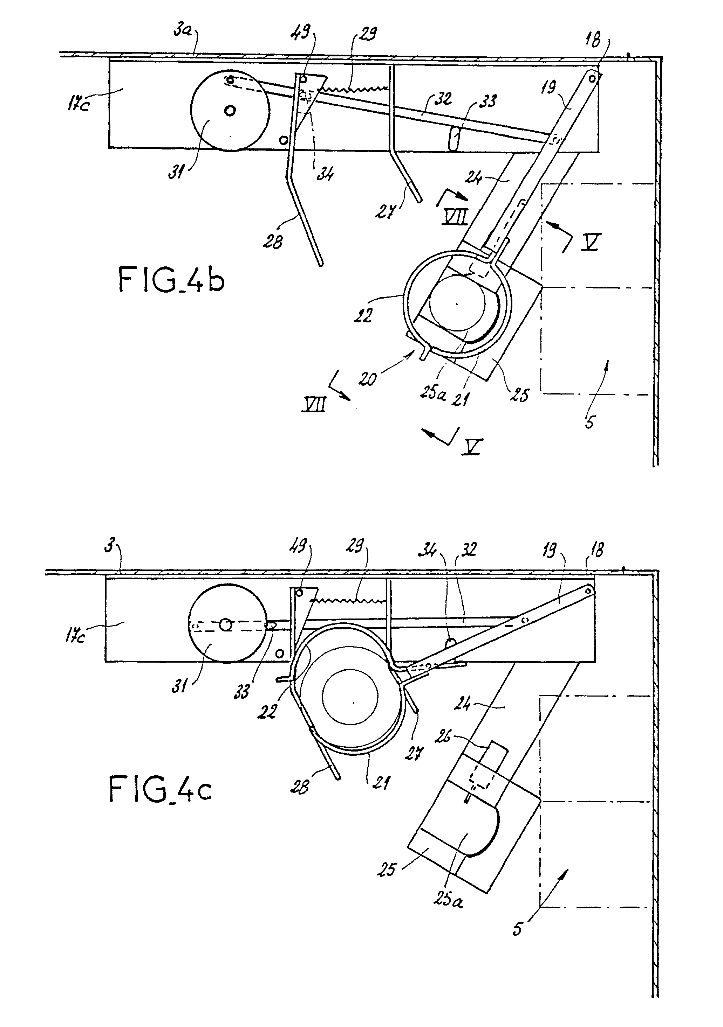

- conformément à la figure 4b, le gobelet usagé 1 passe dans l'ouverture de contrôle 25a du guide 25 ; deux cas doivent être envisagés, le premier selon lequel le gobelet usagé est non conforme, et ne comporte pas par conséquent l'appendice 1e, et le second lequel le gobelet usagé est conforme et comporte l'appendice 1e ; dans le premier cas, le doigt 26a du moyen de détection 26 n'est pas actionné, et alors le monnayeur 13 ne reçoit aucun ordre de commande, de telle façon qu'aucune monnaie n'est restituée à l'utilisateur par le monnayeur 13 ; dans le second cas, le doigt 26a est actionné par le fond rapporté 1e, de telle sorte qu'un ordre de commande est envoyé par le moyen de détection 26 au monnayeur 13, et ainsi de la monnaie correspondant à la consigne du gobelet est restituée par exemple sous forme de pièces accessibles à l'utilisateur par l'ouverture 3c

- conformément à la figure 4b, la butée 34 de la bielle 32 vient au contact du mors mobile 28, pour déplacer ce dernier dans le sens de l'écartement par rapport au mors fixe 27 ; dans ces conditions le gobelet usagé et fondu, resté dans le support de fusion 9 est évacué vers la poubelle 12 ; puis la butée 34 échappant au mors mobile 28, ce dernier revient dans sa position initiale, sous l'effet du ressort de rappel 29

- conformément à la figure 4c, la butée 33 vient ensuite au contact de la section terminale 22d de la partie mobile 22 de l'anneau 20, alors que l'ouverture de ce dernier se trouve en correspondance avec celle des deux mors du support de fusion 9 ; dans ces conditions, la partie 22 pivote à l'intérieur du volet 19, autour de l'axe 22c, pour dégager le rebord 1c du gobelet usagé 1, et laisser tomber ce dernier dans l'ouverture du support de fusion 9

- dès ce moment, le moyen de préhension 7 est retourné vers sa position initiale selon la figure 4a, tandis que le dispositif 10 de génération d'un flux d'air chaud est mis en fonctionnement, pour rétracter le gobelet usagé, et l'amener dans une forme ramassée, telle que montré dans la poubelle 12 à la figure 1

- le sas d'introduction 5 est alors ramené à sa position initiale, de telle sorte qu'un nouveau cycle de fonctionnement peut alors être effectué.

Conformément aux figures 8a et 8b, l'organe de contrôle 26 est du type optique et consiste en un capteur de réflexion, tel que décrit dans le document EP-A-0301978, dont le contenu est intégré à la présente description en tant que de besoin. Pour l'usage d'un tel capteur, on utilise le rebord extérieur 1e d'un gobelet 1 tel que défini précédemment, jouant le rôle d'une zone annulaire extérieure de référence, située à l'extrémité haute du gobelet, dont le facteur de réflexion diffère de celui du corps du même gobelet, compte tenu de sa couleur brillante et blanche, par différence à la couleur mate et brune du corps du même gobelet. Le moyen de préhension 7, et plus précisément la tige d'appui 23 présentent une cale 50 réglable par vissage, située à l'opposé du rebord extérieur 1e supporté par l'anneau 20. La position en hauteur du capteur de réflexion 26 et l'épaisseur ou hauteur de la cale 50 sont ajustées l'une par rapport à l'autre, pour obtenir un signal optique de contrôle, sous l'effet de la présence de la zone annulaire 1e de référence d'un gobelet non conforme, au niveau du capteur 26. Le signal, correspondant à la réflexion d'un pinceau lumineux sur le rebord 1e d'un gobelet conforme, commande le monnayeur 13. Par différence, la présence d'un gobelet non conforme dans l'anneau 20 génère un signal réfléchi de moindre intensité, bloquent le monnayeur 13, et donc la délivrance d'une contre-valeur.

La solution selon les figures 8a et 8b a l'avantage d'être compatible avec des gobelets conformes, présentant une hauteur hors-tout modifiée par rapport à celle des gobelets usuels, sans pour autant comporter l'épaulement 1f représenté à la figure 1.

## Revendications

1. Appareil pour récupérer un objet (1) creux, allongé selon une direction (2) longitudinale ou hauteur, présentant une paroi en matière plastique, par exemple un gobelet, contre la délivrance d'un support de contre-valeur, comprenant un sas (5) pour l'introduction de l'objet par l'utilisateur, un dispositif (6) de reconnaissance de la conformité de l'objet, un dispositif de destruction (8) de l'objet reconnu conforme, un moyen de stockage (12) de l'objet détruit, et un dispositif de délivrance (13) du support de contre-valeur, **caractérisé en ce que** le dispositif (8) de destruction associe au moins un support de fusion (9) de l'objet (1) reconnu conforme, et un dispositif (10) de génération d'un flux d'air chaud, comportant une buse (10a) d'émission du flux, dirigée vers l'objet supporté, ledit générateur d'air chaud étant réglé à une température suffisante pour provoquer une rétraction par fusion de l'objet (1) à détruire.

2. Appareil selon la revendication 1, l'objet à récupérer et à détruire étant ouvert à une extrémité (1d) selon sa hauteur (2), comme par exemple un gobelet, caractérisé en ce que d'une part le support de fusion (9) de l'objet est agencé pour supporter ce dernier par l'une (1c) de ses extrémités selon la hauteur, et d'autre part la buse (10a) du générateur (10) d'air chaud est dirigée selon la hauteur (2) de l'objet supporté.

3. Appareil selon la revendication 2, caractérisé en ce que la buse (10a) du générateur (10) d'air chaud est disposée du côté de l'extrémité ouverte (1d) de l'objet.

4. Appareil selon la revendication 1, caractérisé en ce que le support (9) de fusion est une pince (27,28) à ouverture commandée pour laisser échapper l'objet (1) fondu et donc détruit, vers le moyen (12) de stockage des objets détruits.

5. Appareil selon la revendication 1, caractérisé en ce qu'il comporte un moyen (7) de préhension de l'objet reconnu conforme, agencé pour transporter ledit objet vers le support (9) de fusion, et le laisser tomber sur ce dernier.

6. Appareil pour récupérer un gobelet (1) en matière plastique contre la délivrance d'un support de contre-valeur, ledit gobelet présentant une forme extérieure allongée, de révolution autour d'une direction longitudinale (2), ou hauteur, comportant deux extrémités (1a,1b), l'une fermée (1a) constituant son fond, et l'autre ouverte (1b), ainsi qu'une zone supplémentaire (1e), par exemple un appendice, majorant sa hauteur, ledit appareil comprenant un sas (5) pour l'introduction du gobelet par l'utilisateur, un dispositif (6) de reconnaissance de la conformité du gobelet, un moyen (12) de stockage de l'objet reconnu conforme, un dispositif (13) de délivrance du support de contre-valeur, caractérisé en ce que la zone supplémentaire (1e) étant utilisée comme zone de contrôle aux fins de la reconnaissance d'un gobelet conforme, le dispositif de reconnaissance (6) de la conformité comporte un moyen (26) de détection de la présence sur le gobelet de ladite zone supplémentaire de contrôle.

7. Appareil selon la revendication 6, caractérisé en ce que le moyen de détection comprend, d'une part un moyen de préhension (7) du gobelet à reconnaître, comportant un support de maintien (20) dudit gobelet par l'une de ses extrémités (1c) selon sa hauteur (2), et d'autre part un organe de contrôle (26) associé au moyen de préhension, générant un signal de contrôle en fonction de la valeur de la hauteur contrôlée (2) du gobelet supporté (1) par le moyen de préhension.

8. Appareil selon la revendication 6, selon lequel le gobelet (1) à reconnaître comporte une zone annulaire extérieure (1e), située à son extrémité ouverte selon la hauteur (2) contrôlée, présentant un facteur de réflexion différent de celui du corps (1d) dudit gobelet, caractérisé en ce que, d'une part le moyen de préhension (7) comporte, à l'opposé de l'extrémité ouverte (1e) du gobelet supporté par le support, une cale (50) réglable, et d'autre part l'organe de contrôle est du type optique et comporte un capteur (26) de réflexion sur l'extérieur du gobelet à reconnaître, l'épaisseur de la cale et la position du capteur de réflexion, selon la hauteur contrôlée, étant ajustées l'une par rapport à l'autre, pour obtenir un signal optique de contrôle, sous l'effet de la présence ou de l'absence de la zone annulaire (1e) servant de référence, d'un gobelet conforme ou non, au niveau du capteur de réflexion.

9. Appareil selon la revendication 6, caractérisé en ce que d'une part des moyens moteurs (11) permettent de déplacer le moyen de préhension (7), avec le gobelet (1) à reconnaître, selon une trajectoire de contrôle, et d'autre part le moyen de détection (26) comporte un palpeur (26a) situé selon la trajectoire de contrôle, au niveau de la zone supplémentaire de contrôle (1e) d'un gobelet conforme supporté dans le moyen de préhension.

# FIG.1

FIG.2

FIG.3

FIG.4a

FIG.4b

FIG.4c

10

FIG.5

FIG.6

FIG.7

FIG.8a

FIG.8b

Office européen
des brevets

RAPPORT DE RECHERCHE
EUROPEENNE

Numéro de la demande

EP 90 42 0515

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | FR-A-2 618 239  (MULLER SARL.)<br>* le document en entier * | 1-5 | G 07 F<br>7/06 |
| D,Y,D,A | EP-A-0 250 100  (GENERAL FOODS LTD.)<br>* le document en entier * | 1-5,6-9 | |
| A | EP-A-0 330 714  (GOVONI SPA)<br>* le document en entier * | 1-9 | |
| A | FR-A-2 580 418  (MULLER SARL)<br>* le document en entier * | 1-9 | |
| D,A | US-A-4 197 948  (AMBERG ET.AL.)<br>* le document en entier * | 1,6-9 | |
| A | FR-A-2 631 477  (PONCET)<br>* le document en entier * | 1-6 | |
| D,A | FR-A-2 391 923  (MONO CONTAINERS LTD.)<br>* le document en entier * | 1,6 | |
| A | US-A-1 922 253  (MÇCORMICK ET.AL.)<br>* le document en entier * | 1 | DOMAINES TECHNIQUES RECHERCHES (Int. Cl.5)<br><br>G 07 F<br>B 65 D |
| A | US-A-4 141 493  (ARP)<br>* abrégé; figures 16, 17 * * colonne 4, ligne 31 - colonne 5, ligne 2 @ colonne 6, ligne 43 - colonne 7, ligne 65 * | 1 | |

Le présent rapport de recherche a été établi pour toutes les revendications

| Lieu de la recherche | Date d'achèvement de la recherche | Examinateur |
|---|---|---|
| La Haye | 26 mars 91 | GUIVOL,O. |